# EUROPEAN PATENT SPECIFICATION

(11) **EP 1 220 608 B1**
(45) Date of publication and mention of the grant of the patent: **25.06.2003**
(21) Application number: 00972709.0
(22) Date of filing: 09.10.2000
(51) Int. Cl.: A01N 35/06, C09D 5/16

(54) **BIOCIDAL-ANTIFOULING AGENTS WITH LOW ECOTOXICITY INDEX**
BIOZIDE-ANTIFOULING MITTEL MIT NIEDRIGEM ÖKOTOXIZITÄT-INDEX
AGENTS BIOCIDES ANTI-SALISSURES A FAIBLE INDICE D'ECOTOXICITE

(30) Priority: 15.10.1999 IT MI992166
(43) Date of publication of application: 10.07.2002
(73) Proprietor: LUIGI STOPPANI S.p.A., 20123 Milan (IT)
(72) Inventor: BONATI, Stefano, I-20125 Milano (IT); MONTELEONE, Francesco, I-20060 Cassina de' Pecchi (IT)
(74) Representative: Modiano, Guido, Dr.-Ing.
(86) International application number: EP0009893
(87) International publication number: WO01028328

(56) References cited:
- EP-A- 0 152 852
- DATABASE CHEMABS [Online] CHEMICAL ABSTRACTS SERVICE, COLUMBUS, OHIO, US; KONIYA, KAZUMI ET AL: "Antifouling agents containing vitamin K" retrieved from STN Database accession no. 111:210596 XP002161675 & JP 01 031702 A (IHARA CHEMICAL INDUSTRY CO., LTD., JAPAN) 2 February 1989 (1989-02-02)
- CHEMICAL ABSTRACTS, vol. 115, no. 22, 1991 Columbus, Ohio, US; abstract no. 234844y, YOKOI, JUNJI ET AL.: "Antifouling coatings" XP002161673 & JP 03 131669 A (NIPPON PAINT) 5 June 1991 (1991-06-05)
- CHEMICAL ABSTRACTS, vol. 125, no. 8, 1996 Columbus, Ohio, US; abstract no. 89317d, MYAMOTO, TAKASHI : "Antifouling coating compositions" XP002161674 & JP 08 104832 A (TOYO BOSEKI) 23 April 1996 (1996-04-23)
- DATABASE CHEMABS [Online] CHEMICAL ABSTRACTS SERVICE, COLUMBUS, OHIO, US; WU, GUOYAO ET AL: "Microbicidal coatings or sheets containing vitamin K3, for optical instruments" retrieved from STN Database accession no. 113:138576 XP002161676 & CN 1 036 689 A (HUNAN INSTITUTE OF METERING AND TEST TECHNICS, PEOP. REP. CHINA) 1 November 1989 (1989-11-01)

## Description

### Technical Field

The present invention relates to biocidal-antifouling agents with low ecotoxicity index.

### Background art

In particular, the present invention relates to the use of selected vitamin derivatives as biocidal and antifouling agents for preventing and slowing the growth of algae, molds and microorganisms.

Menadione and its derivatives are notoriously vitamin derivatives which have an antihemorrhagic activity and have long been used in the medical and veterinary field.

In particular, adducts of menadione bisulfite with heterocycles such as triazine, pyrimidine, guanidine have been described in US-3,328,168, while adducts of menadione bisulfite with pyridine derivatives are known from Italian Patent No. 1,097,391.

Conventionally, the only indication for use of these menadione adducts has been their antihemorrhagic activity. Accordingly, these compounds have been applied in the veterinary field as medicines and as additives for feeds meant for farm animals and fish.

Recently, it has also been found that there is another unexpected indication for use of menadione and its derivatives in a technical field which is entirely different from the one in which they are currently and commonly used.

In particular, compositions based on vitamins K1, K2 and K3 have been shown to be active in preventing adhesion of marine organisms and are therefore suitable antifouling agents (JP 1031702).

A similar antifouling activity has been achieved through the use of 1,4-naphtoquinone derivatives incorporated into a polymer matrix (JP 08104832) or of a chlorinated rubber whose active compound is selected from naphtoquinone or *p*-hydroxyquinone derivatives (JP 03131669).

Microbiocidal compositions based on Vitamin K3 are also disclosed in CN 1036689, where the active ingredient in present at a minimum mold-inhibiting concentration of 100mg/L.

Finally, EP 0152852 discloses an anti microbial composition for treating agricultural (edible) and textile substrates as well as surfaces and materials. According to its disclosure, the composition may also contain, among the numerous active ingredients, fat soluble vitamins and variably substituted naphtoquinone derivatives as well as functionalised silanes and mixtures thereof.

Specifically, it has been found surprisingly that certain menadione derivatives have a great ability to inhibit and slow the deposition and growth of a layer of living organisms such as a layer of vegetation, mold or microorganisms on the surfaces of objects and structures exposed to humidity or immersed in fresh or salt water.

### Disclosure of the Invention

One of the aims of the present invention is to provide new indications for use for a class of compounds correlated to the menadione molecule.

Another object is to provide biocidal and antifouling agents which are highly effective in preventing the adhesion of algae, molds and colonies of microorganisms on surfaces of objects and structures exposed to humidity or immersed in water.

Another object is to provide a class of compounds having a biocidal and/or antifouling activity which have minimal ecotoxicity and polluting activity and can therefore be used in the ecosystem without compromising its balance.

In view of this aim, these objects and others which will become apparent hereinafter, and in accordance with a first aspect of the present invention, use of menadione triaminotriazine bisulfite(I) (MTB) and menadione(bis) piperazine bisulfite(II) (MBP) as biocidal and/or antifouling agents is provided.

Within the scope of the present invention, the term "menadione derivatives" is used to refer to menadione triaminotriazine bisulfite(I) and menadione(bis) piperazine bisulfite(II).

The compounds according to the present invention are used as antifouling and biocidal agents having low ecotoxicity and minimal polluting activity with respect to the ecosystem.

The compounds according to the invention are used whenever materials, objects and structures need to be protected from the growth of vegetation or colonies of unwanted microorganisms. In particular, the compounds according to the invention are suitable to prevent and limit the growth of algae and molds on the surfaces of objects that make contact with water or with ambient moisture for prolonged periods of time.

In particular, these objects and structures include watercraft hulls, submerged masonry or metallic structures, floating transport or signaling means, fishing nets, and cooling systems which use seawater.

The materials that can be treated with the compounds according to the invention are materials of various origin, commonly used in the manufacture of items which make contact with fresh water or salt water, such as for example steel, concrete, glass, plastics, rubber, wood, textile fibers, leather, et cetera.

The use according to the present invention advantageously provides for the addition or application of an amount which is effective from an antifouling and/or biocidal standpoint of a compound of the above described type to a material or structure exposed to water or moisture.

The compounds according to the invention are also suitable in the prevention and slowing of mold growth.

For this use, the compounds according to the invention are advantageously added to water-based emulsion paints, to adhesives, cellulose-based glues, fluids for machining and cooling metals, lubricating fluids for spools of thread, systems and raw materials for the processing of paper and for the preservation of tanned hides.

It has also been found surprisingly that the menadione derivatives according to the invention have a biocidal activity against the most disparate bacterial strains that form colonies on the above cited objects and structures.

The compounds of the invention are used in amounts which vary according to the type of application and can be easily determined by a person skilled in the field. Suitable concentrations for the use of the invention can vary from a few ppm (0.0001% by weight for use as antifouling in cooling water such as in power stations, steelworks) up to concentrations of 40%, by weight (formulation for antifouling paints). An effective biocidal concentration for MTB and MBP is advantageously in the range of 0.5% to 10% by weight, preferably of 1 to 5% by weight.

The compounds according to the invention can be applied pure or added to carriers, such as powders, nebulizing agents and dispersants, or can be dissolved or suspended in a liquid, and in this case they are usually accompanied by wetting agents or emulsifiers in order to promote uniform dispersion of the active principle.

In the case of use of menadione derivatives adducts as mold preventers for fluids such as lubricants used in the machining of metals or lubricants for spools of thread, cellulose-based adhesives, for example wallpaper, said adducts can be used in suspension or emulsion, associated with wetting agents or emulsifiers, preferably at concentrations between 3 and 15% by weight.

The compounds according to the invention are furthermore used in the preparation of formulations of antifouling paints preferably in amounts which can vary between 3 and 15% by weight, advantageously in association with base materials.

The base materials for antifouling paints include binding agents such as synthetic and natural resins, homo- and copolymers, synthetic and natural caoutchouc, acrylic polyurethane epoxy resins or preparations of monomers to be polymerized in place to which the antifouling agent is added.

The use of menadione and derivatives according to the invention allows to considerably limit the problems of pollution and ecotoxicity caused by the use, in marine paints, of antifouling agents which are usually based on heavy metal derivatives.

The compounds according to the invention have proved themselves highly toxic and repellent both against microorganisms which tend to form colonies and against algae and molds.

Differently from commonly used antifouling agents, which are based on heavy metals, the derivatives according to the invention, by having a common non-toxic vitamin matrix, are not a source of pollution for the environment.

This advantage is more evident when the compounds according to the invention are used in the cooling of industrial plants located in coastal regions, since in this case enormous amounts of water are treated with antifouling agents in order to avoid the growth of algae in the pumping piping.

The high antifouling effectiveness achieved at low dosage, together with the high biodegradability of the compounds according to the invention, can be noted in the low values of the EII (Environmental Impact Index) = 1-EC₅₀/LC₁ (menadione triaminotriazine bisulfite = -1.84; menadione piperazine bisulfite = -2,0), where:
EC₅₀ is the concentration that inhibits by 50% the settling of the species of larva used as target;
LC1 is the minimum toxic concentration for the larvae used as target.

The lower the ratio between the two parameters, the less the product pollutes. Otherwise, higher values correspond to a higher likelihood of damaging the ecosystem in which the compound is active.

This index is an empirical value for giving a measurement of the toxicity of the tested components with respect to other organisms and also provides an index of polluting characteristics.

By subtracting this ratio EC₅₀/LC₁ from 1, the EII has a positive or negative value depending on whether antifouling effectiveness (EC₅₀) becomes apparent before or after the minimum toxic concentration (LC₁).

Clearly, products having EII values which are positive or in any case negative but close to zero are to be preferred over those which have negative EII values.

The following examples are provided merely as illustration of the present invention and must not be intended as limiting the scope thereof as defined in the appended claims.

### EXAMPLE 1

The antifouling and biocidal activity of the two following menadione derivatives, menadione triaminotriazine bisulfite and menadione bisulfite (piperazine-bis), was tested in the laboratory by adopting the following method, which is extensively described in the document "Evaluation of antifouling biocide performance by means of laboratory test", by Sebastiano Geraci and Marco Faimali, Istituto per la corrosione marina dei metalli, CNR, Genoa).

### MICROORGANISM USED

Approximately 700 adults of Balanus amphitrite were removed and acclimatized in the laboratory in 500-ml containers which were highly oxygenated and then kept in a chamber set by thermostats to 20°C with a light/darkness photoperiod of 12:12 hours for 3 weeks, supplying them every 48 hours with juvenile stages of Artemia salina and two species of microalgae: Tetraselmis suecica and Paclova luther i. After the acclimatization period, the adult culture yielded on a weekly bases a significant production of larvae required for the test.

### PREPARATION OF THE SOLUTIONS

Seawater was used as solvent. Stock solutions were prepared to obtain the following concentrations for the tests: 0.01; 0.1; 0.2; 0.4; 0.6; 0.8; 1; 2; 4; 6; 8; 10; 100 microg per ml⁻¹.

### ACUTE TOXICITY TEST

The resulting larvae were separated from the adults immediately after emission and divided into 200-ml beakers with natural seawater filtered at 0.22 microns and a concentration of 5x10⁻⁵ cells/ml of Tetraselmis seucica, keeping them for 24 hours in a thermostat-controlled cabinet at 20°C. Then approximately 200-250 nauplii were placed in Petri dishes with 10 ml of final volume of natural seawater filtered at 0.22 microns and the portion of each one of the two above cited derivative, in order to obtain the various concentrations of the test. All concentrations were tested 4 times for each product. The various test series were kept in a thermostat-controlled stove for 24 hours at 20°C in darkness.

Then the dead microorganisms were counted in a binocular microscope. Individuals that did not swim and lay on the bottom of the dishes and showed no movement were considered dead. The mortality percentage was calculated by microscope analysis of each dish, averaging the value of the 4 repetitions of each concentration. The data were subsequently process by Probits analysis to calculate, for each product, the 50% lethal concentration (LC50) and the 1% lethal concentration (LC1).

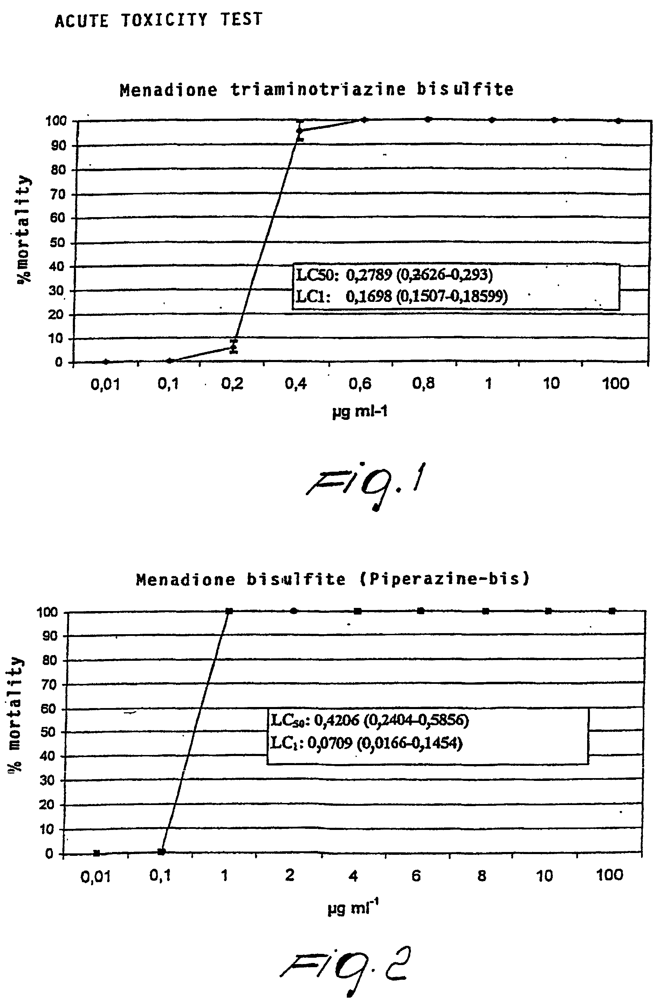

The results of the acute toxicity tests are shown in Figures 1-2, wherein the mortality curves and the values of LC₁ and LC₅₀ are referred to 24 hours. In the two charts, the abscissae plot the concentration expressed as microg per ml⁻¹ and the ordinates plot the mortality percentage. The charts show considerably toxicity of the two tested derivatives with respect to the microorganisms used in the tests.

### EXAMPLE 2

### SETTLEMENT TEST

30-40 ciprys of Balanus amphitrite, obtained from nauplial cultures kept for 7-10 days in a thermostat-controlled chamber at 26°C were introduced in the dishes with the same method used in the nauplial toxicity test. The concentrations of the two above mentioned menadione derivatives prepared for this test were 0.01; 0.05; 0.1; 0.5; 1, 5, 10, 100 microg per ml⁻¹. The dishes were kept for 72 in a thermostat-controlled cabinet at 28°C with an L:D photoperiod of 12:12 at 1400 Lx. At the end of the 72 hours, the individuals settled were counted at the different concentrations with respect to the settlement noted in the control dishes.

In this case also, four repetitions were carried out for each concentration. The settlement percentages were analyzed with the Probits method to obtain the values of EC₅₀ (concentration which inhibits settlement by 50%) and EC₁ (concentration which causes 1% inhibition).

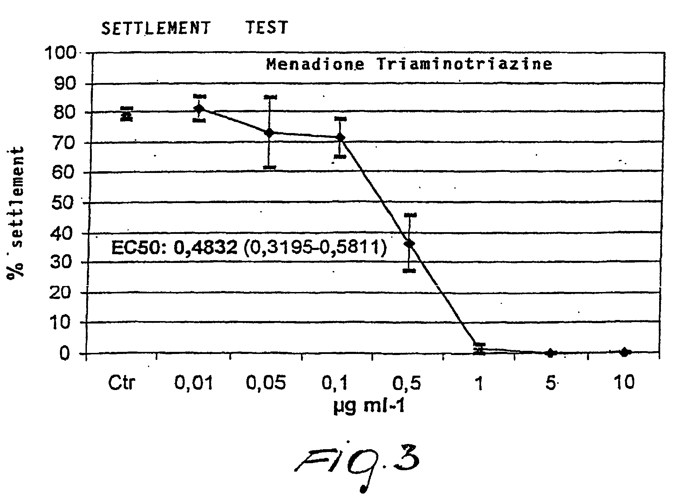

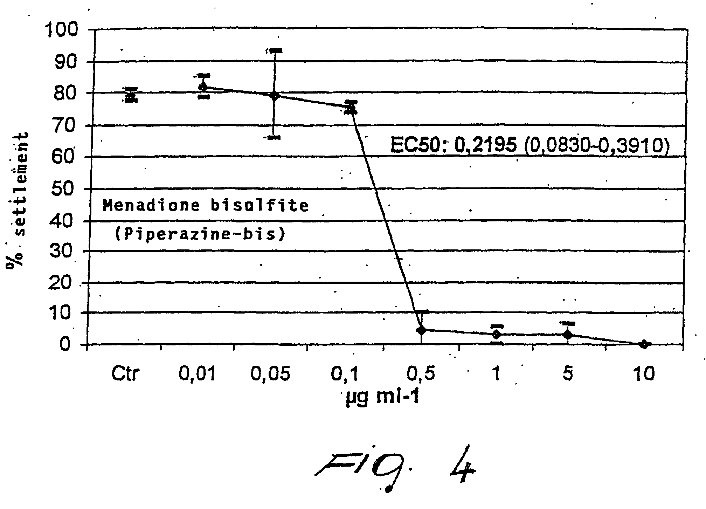

The results of the test are shown in Figures 3-4, which plot the settlement curves and the values of EC₅₀. In particular, the abscissae plot the tested concentration of derivative, expressed as microg ml⁻¹, and the ordinates plot the settlement percentage of the microorganism. The two tested derivatives show values of EC50 lower than 1 microg ml⁻¹. The values plotted in the two charts indicate a high antifouling activity on the part of the tested components.

## Claims

1. Use of a compound selected from the group consisting of menadione triaminotriazine bisulfite(I) (MTB) and menadione(bis) piperazine bisulfite(II) (MBP) as biocidal or antifouling agents with reduced ecotoxicity and polluting activity.

2. Use according to claim 1, wherein said compound is added directly to the cooling water of an industrial plant or of an eletric power station.

3. Use according to claim 1 or 2, wherein said compound is in association with a carrier suitable for direct application to items or structures in contact with water or ambient moisture.

4. Use of the compound according to claim 1, wherein said compound has a concentration between 0.001 and 40% by weight.

5. Use of the compound according to claim 1 as antifouling agent in antifouling paints.

6. Use of the compound according to claim 1 in the prevention and slowing of molds formation.

7. Use of the compound according to claim 1 in the paper industry.

8. Use of the compound according to claim 1 in the tanning industry.

9. Use of the compound according to claim 1 in the preventive treatment of fishing nets.

10. An antifouling paint comprising an antivegetative, biocidal effective amount of a compound selected from the group consisting of menadione triaminotriazine bisulfite(I) (MTB) and menadione(bis) piperazine bisulfite(II) (MBP) dispersed in a paint carrier.

## Patentansprüche

1. Verwendung einer Verbindung, ausgewählt aus der aus Menadiontriaminotriazinbisulfit (I) (MTB) und Menadion(bis)piperazinbisulfit (II) (MBP) bestehenden Gruppe als biozide oder fäulnisverhindernde Mittel mit verminderter Ökotoxizität und Verschmutzungsaktivität.

2. Verwendung nach Anspruch 1, wobei die Verbindung direkt zu dem Kühlwasser eines Industriebetriebs oder eines Elektrizitätswerkes gegeben wird.

3. Verwendung nach Anspruch 1 oder 2, wobei sich die Verbindung in einer Assoziation mit einem Träger befindet, der zu direkten Anwendung auf Einzelgegenstände oder Strukturen im Kontakt mit Wasser und Umgebungsfeuchtigkeit geeignet ist.

4. Verwendung der Verbindung nach Anspruch 1, wobei die Verbindung eine Konzentration zwischen 0,001 und 40 Gew.-% aufweist.

5. Verwendung der Verbindung nach Anspruch 1 als fäulnisverhinderndes Mittel in Antifäulnisfarben.

6. Verwendung der Verbindung nach Anspruch 1 zur Verhinderung und Verzögerung von Schimmelbildung.

7. Verwendung der Verbindung nach Anspruch 1 in der Papierindustrie.

8. Verwendung der Verbindung nach Anspruch 1 in der Gerbereiindustrie.

9. Verwendung der Verbindung nach Anspruch 1 zur vorbeugenden Behandlung von Fischnetzen.

10. Antifäulnisfarbe, umfassend eine antivegetative, biozid wirksame Menge einer Verbindung, ausgewählt aus der aus Menadiontriaminotriazinbisulfit (I) (MTB) und Menadion(bis)piperazinbisulfit (II) (MBP) bestehenden Gruppe, dispergiert in einem Farbträger.

## Revendications

1. Utilisation d'un composé choisi dans le groupe constitué du ménadionetriaminotriazinebisulfite(I) (MTB) et du ménadione(bis)pipérazinebisulfite(II) (MBP) comme agents biocides ou anti-salissures à écotoxicité et activité polluante réduites.

2. Utilisation selon la revendication 1, dans laquelle ledit composé est ajouté directement à l'eau de refroidissement d'une installation industrielle ou d'une centrale électrique.

3. Utilisation selon la revendication 1 ou 2, dans laquelle ledit composé est en association avec un support approprié pour l'application directe à des objets ou structures en contact avec de l'eau ou l'humidité ambiante.

4. Utilisation du composé selon la revendication 1, dans laquelle ledit composé présente une concentration entre 0,001 et 40% en poids.

5. Utilisation du composé selon la revendication 1 comme agent anti-salissures dans des peintures anti-salissures.

6. Utilisation du composé selon la revendication 1 dans la prévention et le ralentissement de la formation de moisissures.

7. Utilisation du composé selon la revendication 1 dans l'industrie papetière.

8. Utilisation du composé selon la revendication 1 dans l'industrie de la tannerie.

9. Utilisation du composé selon la revendication 1 dans le traitement préventif de filets de pêche.

10. Peinture anti-salissures comprenant une quantité biocide anti-végétative efficace d'un composé choisi dans le groupe constitué du ménadionetriaminotriazinebisulfite(I) (MTB) et du ménadione(bis)pipérazinebisulfite(II) (MBP) dispersé dans un support de peinture.
